# EUROPEAN PATENT SPECIFICATION

(11) **EP 1 333 523 B1**
(45) Date of publication and mention of the grant of the patent: **18.09.2013**
(21) Application number: 03075302.4
(22) Date of filing: 31.01.2003
(51) Int. Cl.: H01M 10/54, H01M 6/52, H01M 10/42, B09B 3/00, B09B 5/00, C22B 7/00, C22B 26/12, H01M 6/50, H01M 10/052, H01M 10/054

(54) **Method of and apparatus for dismantling and storage of objects comprising alkali metal, such as alkali metal containing batteries**
Verfahren und Vorrichtung für Demontage und Lagerung von Alkalimetall enthaltende Objekte, wie Alkalimetall enthaltende Batterien
Méthode et appareil pour le démontage et le stockage d'objets comprenant un metal alcalin, tels que les batteries contenant un métal alcalin

(30) Priority: 01.02.2002 EP 02075460
(43) Date of publication of application: 06.08.2003
(73) Proprietor: Batrec Industrie AG, 3752 Wimmis (CH)
(72) Inventor: Zenger, Tomas, 3632 Niederstocken (CH); Krebs, Andreas, 3702 Hondrich (CH); Van Deutekom, Huibert Jacobus Hendrik, 5505 ND Veldhoven (NL)
(74) Representative: Dohmen, Johannes Maria Gerardus

(56) References cited:
- EP-A1- 0 613 198
- EP-A1- 0 618 633
- EP-A2- 0 794 587
- WO-A-01/08245
- DE-A- 4 424 825
- DE-A- 19 518 643
- FR-A1- 2 868 603

## Description

### Field of the Invention

The present invention relates generally to the handling of alkali metals or alkali metal compounds and more specifically, to the handling of lithium containing cells or batteries of all existing industrial classes.

### Background of the invention

The group of alkali metals comprises chemical elements that can be found in the first group of the periodic table of elements, and is known for its strong exothermic chemical reactivity. It is exactly this reactivity that makes handling of these alkali metals, such as crushing, shredding and other mechanical processing steps, a challenging and risky procedure.

In practice, the alkali metals, which comprise lithium, sodium, potassium, rubidium, caesium and francium, are handled within a protective environment chosen to suppress or control the reaction of the alkali metals with any other substance, such as water, acids and non-metals. The reactivity of the alkali metals increases from lithium to francium and as pure elements they are usually stored in oil for safety. Examples of handling procedures as described above, can be found within the lithium battery recycling industry.

With atomic number 3, lithium is the first element in group 1 of the periodic table. Lithium metal reacts very readily with many compounds, generating large quantities of energy and often involving fires and explosions. Lithium especially reacts explosively with any water or water vapour available, generating hydrogen gas, which itself is highly explosive.

Batteries are the main power source for a wide variety of electric and electronic equipment. As batteries contain a large array of different chemical and metallurgical substances, the collection of waste batteries for recycling is ever increasing. For many types of these batteries well established recycling technologies are in operation.

Portable lithium batteries are ever more used in consumer, military and professional applications. Collection and recycling of these batteries pose special problems and require dedicated and professional attention to prevent accidents in the logistic chain from the user until the recycling facility, and during the recycling process itself. The types of hazardous and polluting chemical substances which are liberated during the recycling process need special attention too.

Given the chemical properties of lithium, the main recycling technology for portable lithium batteries is very complicated and expensive because of the use of cryogenic technologies in an extremely low temperature environment of liquid nitrogen. Further, cryogenic processes itself may use quite hazardous materials.

Cryogenic recycling processes have been described in United States patent application 5,888,463 and United States patent application 5,345,033, where the batteries are cooled down to low temperatures after which they are comminuted and the contents are neutralized.

Another known technology is the use of a protective environment of inert gases like helium, argon, krypton, xenon or neon (alternatively even nitrogen is used), as is described in European patent application 613,198. In addition, European patent application EP 1,041,659, mentions the use of a non-oxidizing atmosphere.

These complicated and expensive technologies pay respect to the high reactivity of lithium metal, and the hazardous nature of many of the substances used as electrolytic and cathodic material in these batteries, by directly suppressing an exothermic reaction by means of reducing the internal energy (cryogenic processes) or preventing contact between lithium and its reaction components.

Another disadvantage of the abovementioned dismantling processes, is that they are all very polluting, each in their own way. Note that cryogenic processes consume a lot of energy, and the use of inert gasses requires the first of all purification of these inert gasses which is as well very energy consuming (this again often requires cryogenic processes).

In addition, although these processes provide a means of dismantling the substances, these substances are to be collected first in order to make the process more cost effective. The transportation and storage of these substances provides, in turn, an environmental hazard and requires a lot of preparations.

European patent application number EP 0794587 discloses a method of recovering components of a lithium battery, by means of reducing the ionic conductivity between cathode and anode, and opening the battery.

European patent application number EP 0618633 discloses a method of treating the anode of a lithium battery with a treating fluid for passivation.

### Summary of the invention

It is an object of the present invention to provide a novel and cost effective alternative to the existing methods of dismantling batteries or cells comprising alkali metals, in particular lithium.

It is in particular an object of the present invention to provide a novel and cost effective method for dismantling portable lithium cells or batteries of all existing industrial classes using well established dismantling techniques, such as crushing, shredding or other mechanical processing techniques.

It is a further object of the present invention to provide such a method that after dismantling of the cells or batteries, the chemical substances present in the batteries can easily be separated from the metal scraps and can be recovered and/or prepared for non-hazardous and non-polluting disposal.

It is yet another object of the present invention to protect the environment against pollution by the chemical substances from lithium batteries, liberated during the dismantling operation, which comprise numerous highly toxic materials and compounds, such as sulfur dioxide and thionylchloride, as well as strong complexing agents as boriumtetrafluorides and arsenichexafluorides.

In a first aspect according to the present invention there is provided a method for dismantling batteries or cells comprising alkali metal containing substances, wherein said comprises the features of claim 1.

It has been observed that the carbon dioxide atmosphere enables the dismantling of alkali metal containing substances, such as lithium batteries for example, without uncontrollable exothermic reactions and such that the cells or batteries can be dismantled in a safe and clean manner under a protective atmosphere or environment formed by carbon dioxide.

From an (electro)chemical point of view, it is quite surprising that apparently the lithium present in the batteries reacts more readily with the carbon dioxide by building a passive surface layer, than to react vigorously with the cathode material present in the batteries. During the dismantling operation, such as a shredding operation, the cathode material surfaces and the lithium metal surfaces will be rubbed through and against each other very intensively, and not withstanding this intense rubbing and smearing, the building of a passive layer on the lithium metal seems to be the prime reaction.

It should be noted here that the use of carbon dioxide in the presence of lithium, amongst others in methods for dismantling cells or batteries, is discouraged in the industry. Reference is made to the afore-mentioned document US 5,345,033 as well as numerous safety regulations. However, the use of protective atmospheres comprising carbon dioxide during manufacturing of lithium cells or batteries is known, such as described in EP 0 895 295 which discloses a method of manufacturing a non-aqueous secondary battery comprising lithium containing electrodes, wherein cutting of the electrodes and sticking of metal foils is carried out in a protective atmosphere comprising air or argon, preferably in combination with carbon dioxide. Note that manufacturing of these batteries occurs in a controlled environment, wherein the substances used for processing and the effects of the atmosphere on these substances is predictable. This is however not the case in dismantling processes, where the dismantling of various kinds of alkali metal containing batteries may yield an unpredictable mix of substances (for instance in a shredder), giving rise to unpredictable chemical and physical interactions with a protective atmosphere.

It has further been observed that the method according to the invention is very promising from a commercial point of view, due to the avoidance of complicated and expensive technologies, for the reason that the method essentially can be applied at room temperature, i.e. 293 K.

In addition to the carbon dioxide, the protective atmosphere may comprise at least one further gaseous substance, such as moist air or carbon monoxide. Although a reaction between lithium and water vapour is more exothermic than a reaction with carbon dioxide, this reaction can easily be controlled in presence of carbon dioxide. Water vapour eventually neutralises the lithium, enabling the further handling of the scrap of the dismantled cells or batteries.

If required, the at least one further gaseous substance may comprise an inert gas, including nitrogen.

In practice, the at least one further gaseous substance is added to the protective atmosphere during the handling of the objects, and may continuously or with given intervals be refreshed during the handling or storage of the objects.

In a further processing step, after dismantling of cells or batteries, such as lithium cells or batteries, the residual scrap of the cells or batteries may be washed or leached, for example using an acidified aqueous liquid. This step may be enhanced by thermal treatment of the scrap, such as pyrolysis, in order to improve the removal of substances like, for example, plastics. Further, mechanical means, such as sieving, tumbling, size grading or any other known sorting technique, to separate metal fractions from the scrap may also be used.

Any residual products of the washing or leaching, such as residual leaching or washing liquid, may be processed in order to recycle valuable chemical substances present in the residue.

In a further embodiment of the invention, the method comprises prior to said dismantling, a step of storing the batteries or cells under the protective atmosphere using storage means. Another preferred embodiment of the invention comprises a step of transporting said batteries or cells in storage means under said protective atmosphere.

Note that a step of collecting the batteries and storing cells or batteries in the protective atmosphere, incredibly increases cost efficiency and flexibility, and makes the method more environmental friendly due to economy of scale. The invention also provides a means for performing the steps of transportation as well as storage, enabling the collection of cells and batteries, using the same novel and inventive concept of using a protective atmosphere as described herein-above.

In a second aspect, the invention provides an arrangement for dismantling batteries or cells comprising alkali metal containing substances, wherein said arrangement comprises the features of claim 15.

For applying the several embodiments of the method according to the present invention, the outlets of the gas-tight chambers are arranged for adding at least one further gaseous substance in addition to the carbon dioxide atmosphere, and for refreshing the atmosphere during the processing of the objects.

In a yet further embodiment of the arrangement according to the present invention, in addition to the gas-tight chambers, a reactor room for collecting and washing of the processed objects with an acidified aqueous liquid is provided, the reactor connecting to the gas-tight door for removing the processed objects from the second gas-tight chamber.

Note that another embodiment not falling under the scope of the invention as defined in the claims provides storage means to the arrangement, arranged for storing the batteries and cells under a protective atmosphere, in accordance with the respective embodiment of the first aspect of the invention.

In a third aspect not falling under the scope of the present invention as defined in the claims an arrangement for the storage of objects comprising alkali metal containing substances, in particular lithium containing batteries, is provided comprising a gas-tight chamber in which said objects can be stored, which gas-tight chamber is separated from its surrounding environment by an air lock, and comprising an inlet and an outlet for adding and removing gasses from said gas-tight chamber, wherein said gas-tight chamber and said in- and outlets are arranged for maintaining a carbon dioxide atmosphere in said chamber.

In a fourth aspect not falling under the scope of the present invention as defined by the claims an arrangement for the storage of batteries or cells comprising alkali metal containing substances, in particular lithium containing batteries or cells, is provided comprising a chamber in which said batteries or cells can be stored, wherein said chamber comprises means for filling said chamber with a substance, wherein said means for filling said chamber are arranged for providing a carbon dioxide atmosphere in said chamber.

In a fifth aspect not falling under the scope of the invention as defined by the claims there is provided a vehicle arranged for transportation of batteries or cells comprising alkali metal containing substances, in particular lithium containing batteries or cells, comprising a chamber in which said batteries or cells can be stored, wherein said chamber comprises means for filling said chamber with a substance, wherein said means for filling said chamber are arranged for providing a carbon dioxide atmosphere in said chamber.

Note that a vehicle according to said fifth aspect is capable of performing most of the steps required for collection of the batteries or cells to be dismantled, and is able to perform these steps in an environmental friendly manner.

The present invention will now be further elucidated by a description and drawings referring to a preferred embodiment thereof, directed to the dismantling of lithium containing cells or batteries. The invention is not limited to the embodiment and experiments disclosed, which are provided for explanatory purposes.

### Brief Description of the Drawings

Figure 1 shows a flow chart type diagram illustrating the method according to the present invention.
Figure 2 shows, in a schematic and illustrative manner, an arrangement for dismantling cells or batteries in accordance with the present invention.
Figure 3 shows a cross section of a storage container for the storage of alkali metal containing substances, such as lithium containing batteries.
Figure 4 shows a storage facility or bunker, equipped with means for filling the facility with carbon dioxide in case of an emergency.
Figure 5 shows a vehicle arranged for transportation of batteries or cells under a protective carbon dioxide environment, according to the present invention.

### Detailed Description of the Invention

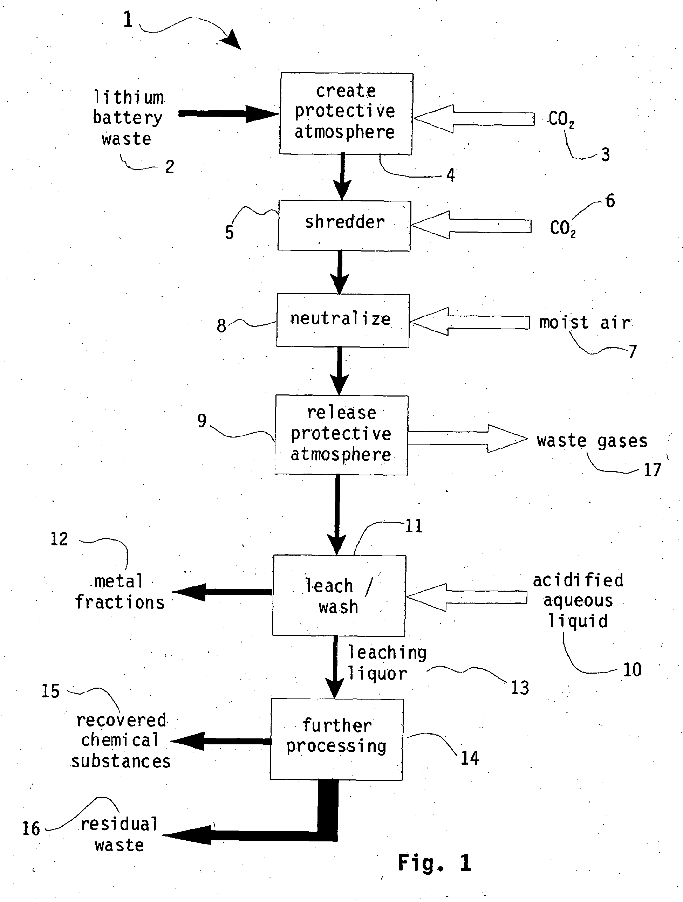

Figure 1 illustrates in a flow chart type manner a method according to an embodiment of the invention, generally designated by reference numeral 1.

In a first step, lithium battery waste 2 is received in a protective environment or atmosphere 4 formed by carbon dioxide gas (CO₂) 3.

In a second step, the waste material 2 is dismantled under the gaseous carbon dioxide protective atmosphere 4 using a mechanical processing technique such as shredding 5, while the carbon dioxide gas 6 is constantly refreshed.

The carbon dioxide atmosphere 4 enables shredding of the battery waste 2 without strong exothermic reactions. The lithium metal seems to react more readily with the carbon dioxide, building a passive surface layer, than to react vigorously with the cathode material present in the cells or batteries. This although lithium metal surfaces and cathode material in the battery scrap are rubbed through and against each other intensively in the shredder 5.

Instead of shredding the battery waste 2, a large number of alternative techniques can be used to dismantle the batteries, such as cutting, pressuring, deforming, separating, breaking or a large number of mechanical deformation techniques, either alone or in combination.

After dismantling the battery waste 2, in the preferred embodiment shown, moist air 7 is added to the carbon dioxide atmosphere 4, in order to neutralize 8 the scrap material resulting from the shredding operation 5. Then, when all metal scrap is neutralized, the protective atmosphere is released 9 by removing any residual gases 17.

After this, the neutralized metal scrap is leached and washed 11 with an acidified aqueous liquid 10. As a result of the leaching process 11, metal fractions 12 can be separated safely from the leaching liquor 13 that contains soluble chemical substances.

In washing and leaching experiments with neutralized battery scrap, it has been observed that almost all of the metal fractions can be recovered using this process. This may be enhanced by thermal treatment of the scrap, such as pyrolysis, as this improves the removal of substances like, for example, plastics. Further, mechanical means (not shown in the figures), such as sieving, tumbling, size grading or any other known sorting technique, to separate metal fractions from the scrap may also be used.

After the metal fractions 12 are removed the leaching liquor can be processed in step 14 as to recover a number of the chemical substances 15 and to safely and cleanly dispose of the residual waste 16.

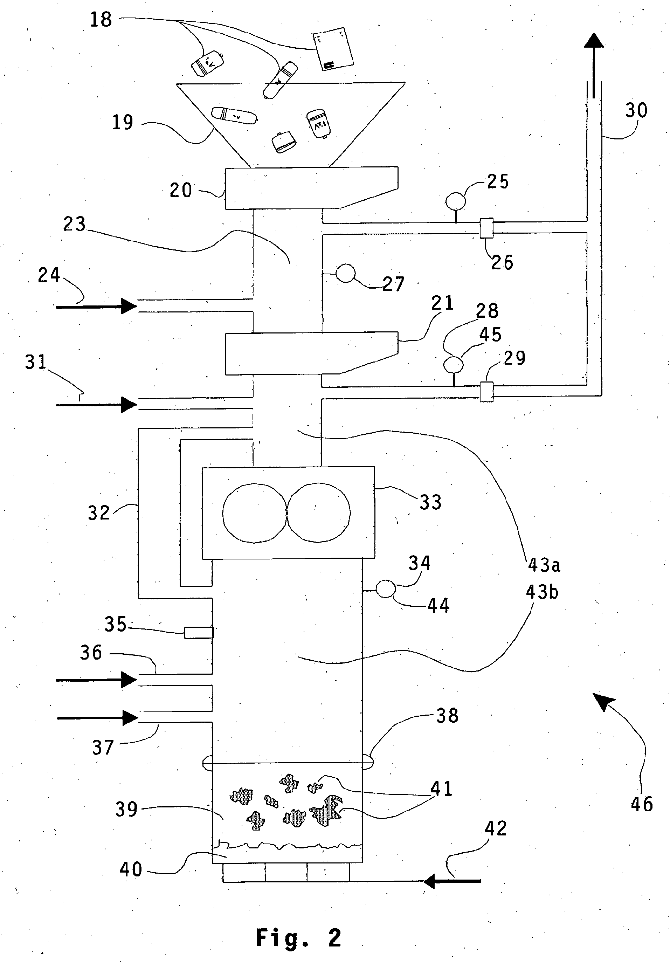

In figure 2 an arrangement 46 is shown, for performing the above-disclosed dismantling of cells or batteries, in accordance with the present invention.

The arrangement comprises a first gas-tight chamber 23 and a second gas-tight chamber 43a,b, which connect by an intermediate gas-tight door 21. The first gas-tight chamber 23 connects by a gas-tight door 20 to a funnel shaped supply port 19, for receiving battery waste 18. The second gas-tight chamber 43a,b connects by a gas-tight coupling or a door 38 to a reactor room 39.

The first chamber 23 comprises a gas inlet port 24 and a gas outlet port 30. The second chamber 43a,b comprises means for dismantling the battery waste, such as a shredder 33, which divides the chamber in an upper part 43a and a lower part 43b. The upper part 43a of the second chamber, situated between the shredder 33 and the intermediate gas-tight door 21, comprises an inlet port 31 for fire fighting safety purposes and connects also to the gas outlet port 30. The lower part 43b of the second chamber, situated between the shredder 33 and the reactor room 39 comprises a gas inlet port 36 and an inlet port 37 for fire fighting safety purposes. Both parts 43a and 43b of the second chamber connect by gas overflow pipe 32.

The gas outlet port 30 connects to the first and second chambers 23, 43a,b by one-way valves 26 and 29, respectively. The atmosphere inside the first chamber 23 can be monitored by barometer means 27 and an oxygen measuring device 25. The gas pressure inside chamber 23 can be controlled by the one-way valve 26. The atmosphere inside the second chamber 43a,b can be monitored by barometer means 34, temperature measurement means 44, a flame detector 35, oxygen measuring means 28 and a hydrogen measuring device 45. Although not explicitly shown, those skilled in the art will appreciate that the gas supply via the inlet ports 24 and 36 can be likewise controlled by one-way valves. In practice the monitoring and control means 25, 26, 27, 28, 29, 34, 44 and 45 as well as the operation of the doors 20, 21 are processor controlled (not shown).

In accordance with the present invention, the first and second chambers 23, 43a,b, the inlet and outlet ports 24, 31, 36 and 30, the overflow pipe 32, the doors 20, 21 and 38, the shredder 33 as well as the monitoring, control and valve means 25, 26, 27, 28, 29, 34, 44 and 45 are arranged for providing a carbon dioxide atmosphere or environment in the arrangement 46.

In operation, battery waste 18 is supplied to the first chamber 23 via the supply funnel 19 and the gas-tight door 20. After closing off the door 20, the waste 18 in the first chamber 23 is brought under a protective atmosphere by adding carbon dioxide via the inlet port 24, while the intermediate gas-tight port 21 is closed. The atmosphere inside the first chamber 23 is monitored via the barometer means 27 and the oxygen measuring device 25. The pressure inside the first chamber 23 is controlled by the one-way valve 26 to the outlet 30.

After the battery waste 18 has been brought under the protective atmosphere, the intermediate gas-tight port 21 is opened and the waste 18 will pass, through upper part 43b, to the shredder 33 in the second chamber, under the force of gravity.

It will be appreciated that the shredder 33 may be replaced by any device for dismantling cells or batteries, such as a cutting device, a pressuring device, a deformation device, a separation device, a breaking device or any other device for mechanically processing the waste.

The atmosphere within the second chamber 43a,b and the shredder 33 is controlled by providing carbon dioxide gas through the inlet port 36, gas overflow pipe 32 and one-way valve 29 to outlet 30. The atmosphere can be monitored by the barometer means 34, the temperature measuring means 44, the flame detector 35, the oxygen measuring device 28 and the hydrogen measuring device 45. For safety reasons, possible fire within shredder 33 can be controlled by the fire fighting devices 31 and 37.

After the shredder operation 33, the residual battery scrap 41 from the shredder 33 will fall into the lower part 43b of second chamber 43. Here, according to the preferred embodiment of the present invention as shown, neutralizing of the battery scrap 41 will take place. During this phase of the process, besides supplying CO₂ gas via the inlet port 36, other gaseous substances such as moist air and inert gasses can be introduced into second chamber 43 via the inlet port 36.

After shredding and neutralizing the battery scrap 41, under the condition that oxygen and hydrogen levels are safe, the scrap 41 is removed by opening of the door or coupling 38 to the reactor room 39. The reactor room 39, which receives the (mostly neutralized) battery scrap 41, may comprise a bed of dry ice 40 and is air conditioned by an air conditioning system 42.

Outside the protective atmosphere, the abovementioned battery scrap 41 can be leached and washed in an acidified aqueous liquid, for example, to recover the metal fractions. This may be enhanced by thermal treatment of the scrap (not shown), such as pyrolysis, as this improves the removal of substances like, for example, plastics. Further, mechanical means (not shown in the figures), such as sieving, tumbling, size grading or any other known sorting technique, to separate metal fractions from the scrap may also be used. After this, the residue of the washing process can be processed even further, to recover as much as possible chemical substances, thereby avoiding as much as possible pollution of the environment.

The invention will be further clarified by reference to a number of experiments for dismantling lithium cells or batteries, carried out with the arrangement 46, disclosed above.

Portable lithium batteries can be classified into three main classes. These classes are based upon the electrochemistry, the application fields, and the hazards involved in the processing of the lithium batteries, and between which there is a clear relationship.

The three main classes or types of portable lithium batteries are:
- consumer type,
- professional type, and
- lithium ion type batteries.
The class of professional type batteries may further be subdivided into two sub-classes:
- lithium-thionyl chloride (professional type A), and
- lithium-sulfur dioxide (professional type B).

The electrolyte of the first of the two professional type batteries, i.e the lithium-thionyl chloride type, has a boiling point well above room temperature. The electrolyte of the second type, i.e. the lithium-sulfur dioxide type, is gaseous at room temperature.

Note that these two sub-types are characterized by the main type of electrolyte (thionyl chloride and sulfur dioxide). Especially the thionyl chloride group consists of a large number of further electrolytes, which behave physically in more or less the same way. Further the thionyl chloride types are the main representative, whilst the others only being of minor importance from a users point of view.

Further, it is noted that especially the professional type batteries are mainly used as multi-cell batteries, packed together, using several types of plastic containers and tapes. The present invention also applies to the dismantling of these packs.

During the development phase of the present invention, a number of experiments have been carried out to study the processing of lithium batteries in a protective environment comprising carbon dioxide.

The first set of experiments has been executed to investigate the behaviour of the main classes of lithium batteries. During these experiments, different amounts of the various types of batteries have been processed. In one of these experiments, 5 kg of the most hazardous type of lithium batteries to dismantle, i.e. the professional type B (containing sulfur dioxide), has been washed with 0,5 m³/hour carbon dioxide gas whilst processing in the shredder 33. During the shredder operation the temperature of the mass did not exceed 297 K.

After 15 minutes the operation was stopped and the reactor room 39 was opened. Upon opening of the reactor, the temperature of the mass rapidly increased but did not exceed 353 K, which is an acceptable temperature. The mass was discharged after 2 hours, at a temperature of 298 K.

During this first set of experiments it was observed that 5kg of each type of battery could safely be dismantled using a carbon dioxide wash of 0,5 m³/hour for various durations (all less than one hour).

In a further experiment 20kg of a mixture of all types of portable lithium type batteries including added impurities (simulating a more realistic process) has been dismantled while it was washed with carbon dioxide gas. The amount of carbon dioxide varied between 0,5 m³/hour and 1 m³/hour during the experiment. The duration of the washing and shredder operation amount in total 215 minutes and the temperature did not exceed 403 K. After opening of the reactor and discharging the mass, the temperature did not exceed 313 K.

In another experiment, using as well as 20kg of a mixture of all types of portable lithium type batteries, including added impurities, different amounts of carbon dioxide gas, varying between 1 m³/hour and 4 m³/hour, were used during the dismantling operation. In addition to the carbon dioxide, with intervals, up to 1 m³/hour moist air was added. The dismantling operation was stopped after 330 minutes. During the experiment, the temperature did not exceed 351 K. Directly after opening of the reactor, the temperature increased rapidly, but did not exceed 423 K. The experiment showed that the temperature during the dismantling operation can be excellently controlled by using a carbon dioxide gas wash, in combination with moist air.

Samples from the mass that was taken from this last experiment have been leached and washed with acidified aqueous liquid and analysed in order to determine how well the metal fractions can be separated from the scrap. It was concluded from these last experiments that approximately 80% of the metal fractions can be retrieved from the scrap if the washing is performed with dedicated mechanical agitation. The washing liquid can be further processed, for recovering further chemical substances, if required.

Specifically, given the behaviour of lithium in carbon dioxide as observed in the above experiments, one skilled in the art will appreciate the use of carbon dioxide in storage facilities for objects that contain lithium or other alkali metals that may for instance be used to hold batteries and cells to be dismantled, until the step of dismantling can be performed.

Accordingly, an embodiment not falling under the scope of the invention as claimed relates to an arrangement such as a storage container or the like, comprising a gas-tight chamber in which the objects can be stored, which gas-tight chamber is separated from its surrounding environment by an air lock. The chamber having an inlet and an outlet arranged for maintaining a carbon dioxide atmosphere in the chamber.

In a yet further embodiment not falling under the scope of the invention as claimed provides an arrangement for safely storing objects comprising alkali metal containing substances, in particular lithium containing batteries, in a chamber comprising means for filling the chamber with a substance in case of an emergency, such as a fire, wherein the means for filling the chamber are arranged for providing a carbon dioxide atmosphere in the chamber.

Note that the above embodiments may also be comprised in the arrangement of figure 2.

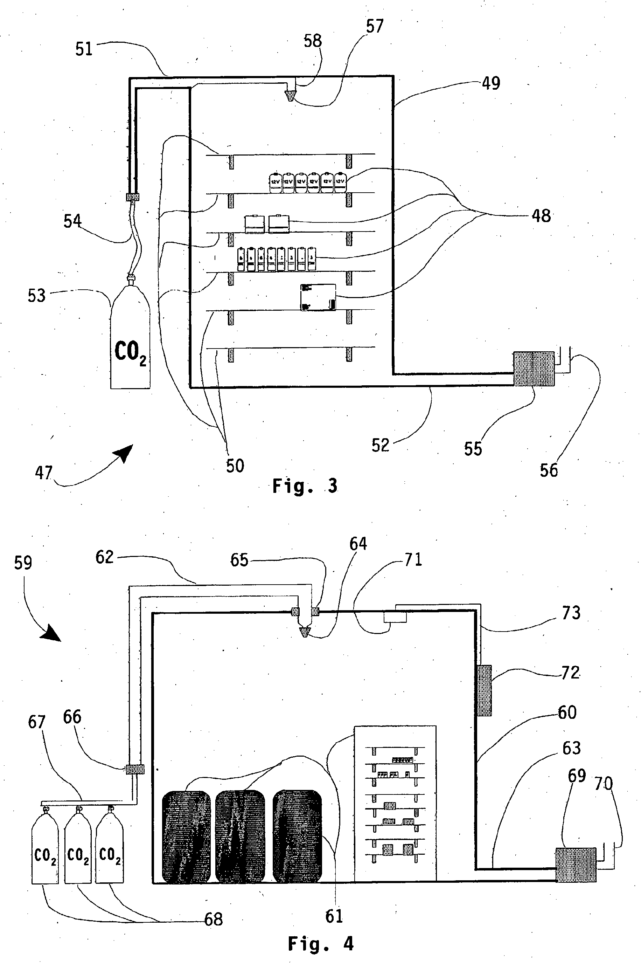

Figure 3 shows another preferred embodiment not falling under the scope of the invention as claimed. In this figure an arrangement 47 of a gas-tight container 49 for the storage of alkali metal containing objects, such as lithium batteries 48, is equipped with means 51, 53, 54, 57 and 58 for filling the container with carbon dioxide and a suction arrangement 52, 55 and 56 for removing gases from the atmosphere in container 49.

The gas-tight container 49 comprises shelves 50 onto which batteries 48 may be stacked. It further comprises an inlet 51 connected to a carbon dioxide bottle 53 by a hose 54, which inlet 51 connects to a tube 58 inside the container 49, which tube 58 ends in a nozzle 57 for spreading carbon dioxide throughout the container 49. At the bottom of the container 49, an outlet 52 is connected to a suction unit 55 which comprises an outlet 56. It will be appreciated that the container will also comprise a door or lid (not shown) for placing the batteries in the container.

Figure 4 shows a cross section of a storage facility 59. The storage facility comprises a storage chamber 60, in which containers 61 filled with alkali metal containing substances or objects may be stored, an inlet 62 through which carbon dioxide may be added in case of an emergency, and an outlet 63 connected to a suction unit 69 with outlet 70. Inlet 62 enters the room via coupling 65 and is connected to a nozzle 64 for quickly filling the storage chamber 60 with carbon dioxide. On the other end, inlet 62 is connected to a number of carbon dioxide bottles 68 by an automatic valve 66 and tubes 67. The facility 59 further comprises a detection unit 71 for detecting smoke, fire or heat development inside chamber 60. The detection unit 71 is connected 73 to an electronic device 72 which, in the case of an emergency inside the chamber 60, triggers both valve 66 to open and suction unit 69 to start operating. The chamber 60 will as such be brought under a protective environment in which the stored substances and objects 61 may quietly react until they are neutralized.

A similar arrangement as is shown in figure 4 may be arranged for transportation by means of a vehicle. This provides a means for collecting batteries or cells to be dismantled. Note that collecting batteries and cells enables a method of the present invention to be carried out on a larger scale, providing environmental benefits and cost efficiency.

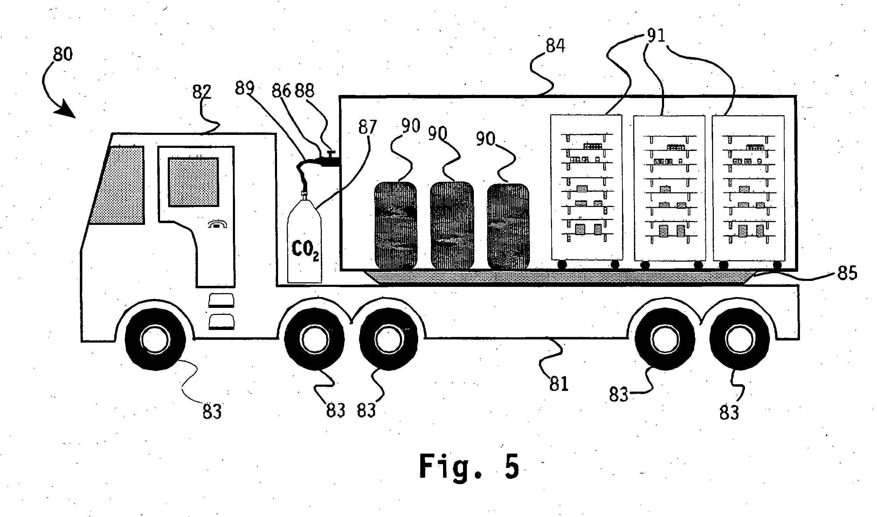

An arrangenent as described above is, for instance, shown in Figure 5, which illustrates a vehicle (generally indicated as 80), comprising a chassis 81, which chassis 81 comprises a cabin 82 and wheels 83. The vehicle is arranged for carrying a storage means or storage container 84, which storage container 84 comprises means 85 for placing or hauling said container 84 ont o said vehicle 80. Said means 85 may comprise a rail for instance.

The container 84 may be air-tight and comprises inlet means 86 which are connected to a repository of carbon dioxide, such as gas bottle 87, for providing a protective atmosphere in said container. Said inlet means may comprise a (automatic or manual) valve 88 and is connected to said gas bottle 87 by means of a hose 89. Note that in case said valve is an automatic valve, this may be controlled from inside the cabin 82 of the vehicle. Said container is arranged for comprising alkali metal containing batteries or cells or likewise objects, such as barrels 90 which comprise lithium containing batteries or movable containers 91 comprising the same.

Use of the invention is not limited to the handling of lithium batteries.

## Claims

1. A method (1) for dismantling a battery or cell (18) comprising alkali metal containing substances, said method comprising subjecting said battery or cell (18) to a mechanical deformation process (5) In the presence of a protective atmosphere (4), wherein said protective atmosphere (4) is a carbon dioxide atmosphere, **characterized in that**, said mechanical deformation process (5) in which cathode material of said battery or cell and said alkali metal containing substances are rubbed through and against each other intensively, yields an unpredictable mix of substances and wherein during said mechanical deformation process (5) said alkali metal containing substances react with said carbon dioxide atmosphere for building a passive surface layer on said substances.

2. A method according to claim 1, wherein said protective atmosphere (4) is gaseous.

3. A method according to any of the previous claims, wherein, In addition to said carbon dioxide, said protective atmosphere (4) comprises at least one further gaseous substance, such as, but not limited to an inert gas, moist air, nitrogen, and carbon monoxide.

4. A method according to any of the claims 3, wherein said at least one gaseous substance is added to said protective atmosphere (4) during said dismantling of said objects.

5. A method according to any of the previous claims, wherein said protective atmosphere (4) is refreshed during said dismantling of said objects.

6. A method according to any of the previous claims, wherein prior to said dismantling, said method further comprises a step of storing said batteries or cells (18) under said protective atmosphere (4)using storage means.

7. A method according to any of the previous claims, further comprising a step of transporting said batteries or cells (18) in storage means under said protective atmosphere.

8. A method according to any of the previous claims, wherein said dismantling comprises at least one of shredding, cutting, pressuring, deforming, separating, breaking, or a mechanical deformation technique for providing residual scrap.

9. A method according to any of the previous claims, wherein after said dismantling of said cells or batteries (18), the residual scrap of said cells or batteries (18) is neutralized.

10. A method according to claim 9, wherein said neutralization of said scrap is carried out by adding moist air to said protective atmosphere.

11. A method according to any of the claims 9 or 10, wherein after said neutralization of said scrap of said cells or batteries (18), said scrap is washed or leached.

12. A method according to claim 11, wherein said washing is carried out with an acidified aqueous liquid.

13. A method according to any of the claims 11 or 12, wherein residual products of said washing or leaching, such as residual leaching or washing liquid, is processed in order to recycle valuable chemical substances present in said residue.

14. A method according to any of the previous claims, comprising a step of further processing of said scrap by at least one of a group comprising pyrolysls, sieving, tumbling, size grading and any other sorting technique.

15. An battery or cell dismantling arrangement (46) for dismantling a battery or cell (18) comprising alkali metal containing substances, comprising a first gas-tight chamber (23), having an inlet (24) for adding gasses to said first gas-tight chamber (23) and an outlet (30) for removing gasses from said first gas-tight chamber (23), a second gas-tight chamber (43) having an inlet (36) for adding gasses to said second gas-tight chamber and an outlet (30) for removing gasses from said second gas-tight chamber, said second gas-tight chamber (43) comprising means (33) for mechanically dismantling said battery or cell (18), said first gas-tight chamber (23) having a gas-tight door (20) for receiving said objects, said second gas-tight chamber (43) having a gas-tight door (38) for removing said dismantled battery or cell (18), and said first gas-tight chamber (23) and said second gas-tight chamber (43) connect by a gas-tight door (21) for exchanging said battery or cell (18) to be dismantled, wherein said inlets (24, 36) are carbon dioxide inlets (24, 36), and wherein said first and said second gas-tight chamber (23, 43) and said outlets (30) are arranged for providing a carbon dioxide atmosphere In said chambers, wherein said means for mechanically dismantling are means (33) for performing a mechanical deformation process (5), **characterized In that**, said means (33) for performing said mechanical deformation process (5) In use In which cathode material of said battery or cell (18) and said alkali metal containing substances are rubbed through and against each other, yields an unpredictable mix of substances, for reacting said alkali metal containing substances with said carbon dioxide atmosphere during said mechanical deformation process (5) for building a passive surface layer on said substances.

16. An arrangement according to claim 15, wherein said in- and outlets (24, 36, 30) of said gas-tight chambers (23, 43) are arranged for adding at least one further gaseous substance In addition to said carbon dioxide atmosphere.

17. An arrangement according to any of the claims 15 or 16, arranged for refreshing said atmosphere during said dismantling of said batteries or cells (18).

18. An arrangement according to any of the claims 15, 16 or 17, wherein said dismantling comprises any of a group comprising shredding, cutting, pressuring, deforming, separating, breaking, or a mechanical deforming technique for providing residual scrap.

19. An arrangement according to any of the claims 15-18, comprising, In addition to said gas-tight chambers (23, 43), a reactor room (39) for collecting and washing of said processed objects with an acidified aqueous liquid, said reactor (39) connecting to said gas-tight door (38) for removing said processed objects from said second gas-tight chamber (43).

20. An arrangement according to any of the claims 15-19, comprising means arranged for further processing of said processed objects, which means for further processing are arranged for performing at least one of a group comprising pyrolysis, sieving, tumbling, size grading and any other sorting technique.

21. An arrangement according to any of the claims 15-20, further comprising storage means arranged for storing said batteries or cells (18) under said carbon dioxide atmosphere, prior to said dismantling.

## Patentansprüche

1. Verfahren (1) zum Demontieren einer Batterie oder Zelle (18) mit Alkalimetall enthaltenden Substanzen, bei dem die Batterie oder die Zelle (18) einem mechanischen Verformungsprozess (5) unter einer Schutzatmosphäre (4) unterzogen wird, wobei die Schutzatmosphäre (4) eine Kohlenstoffdioxid-Atmosphäre ist, **dadurch gekennzeichnet, dass** der mechanische Verformungsprozess (5), in dem Kathodenmaterial der Batterie oder der Zelle und die Alkalimetall enthaltenden Substanzen intensiv durchgerieben und aneinander gerieben werden, eine unvorhersehbare Mischung von Substanzen ergibt, und wobei die Alkalimetall enthaltenden Substanzen während des mechanischen Verformungsprozesses (5) mit der Kohlenstoffdioxid-Atmosphäre unter Bildung einer passiven Oberflächenschicht auf den Substanzen reagieren.

2. Verfahren nach Anspruch 1, wobei die Schutzatmosphäre (4) gasförmig ist.

3. Verfahren nach einem der vorhergehenden Ansprüche, wobei die Schutzatmosphäre (4) zusätzlich zu dem Kohlenstoffdioxid wenigstens eine weitere gasförmige Substanz umfasst, beispielsweise, aber nicht einschränkend, Edelgas, feuchte Luft, Stickstoff und Kohlenmonoxid.

4. Verfahren nach Anspruch 3, wobei die wenigstens eine gasförmige Substanz der Schutzatmosphäre (4) während des Demontierens der Objekte zugefügt wird.

5. Verfahren nach einem der vorhergehenden Ansprüche, wobei die Schutzatmosphäre (4) während des Demontierens der Objekte aufgefrischt wird.

6. Verfahren nach einem der vorhergehenden Ansprüche, wobei das Verfahren ferner vor dem Demontieren einen Lagerungsschritt der Batterien oder Zellen (18) unter der Schutzatmosphäre (4) mittels Lagermitteln umfasst.

7. Verfahren nach einem der vorhergehenden Ansprüche, wobei ferner ein Transportschritt der Batterien oder Zellen (18) in Lagermitteln unter der Schutzatmosphäre vorgesehen ist.

8. Verfahren nach einem der vorhergehenden Ansprüche, wobei das Demontieren wenigstens eines von Schreddern, Schneiden, Pressen, Verformen, Trennen, Brechen oder einer mechanischen Verformungstechnik zum Bereitstellen von Restabfall umfasst.

9. Verfahren nach einem der vorhergehenden Ansprüche, wobei der Restabfall der Zellen oder Batterien (18) nach dem Demontieren der Zellen oder Batterien (18) neutralisiert wird.

10. Verfahren nach Anspruch 9, wobei das Neutralisieren des Abfalls durch Hinzufügen von feuchter Luft zur Schutzatmosphäre durchgeführt wird.

11. Verfahren nach einem der Ansprüche 9 oder 10, wobei der Abfall nach dem Neutralisieren des Abfalls der Zellen oder Batterien (18) gewaschen oder ausgespült wird.

12. Verfahren nach Anspruch 11, wobei das Waschen mit einer angesäuerten, wässrigen Flüssigkeit durchgeführt wird.

13. Verfahren nach einem der Ansprüche 11 oder 12, wobei Restprodukte des Waschens oder Ausspülens, beispielsweise verbleibende Spül- oder Waschflüssigkeit, verarbeitet werden, um in dem Rückstand vorhandene, werthaltige chemische Substanzen aufzubereiten.

14. Verfahren nach einem der vorhergehenden Ansprüche, mit einem Schritt zur weiteren Verarbeitung des Abfalls durch wenigstens einen Schritt einer Gruppe, die Pyrolyse, Sieben, Rotieren, Größenklassifizieren und jede andere Sortierungstechnik umfasst.

15. Batterie- oder Zellendemontageanordnung (46) zum Demontieren einer Batterie oder Zelle (18) mit Alkalimetall enthaltenden Substanzen, mit einer ersten gasdichten Kammer (23), die einen Einlass (24) für das Hinzufügen von Gasen zu der ersten gasdichten Kammer (23) und einen Auslass (30) für das Entfernen von Gasen aus der ersten gasdichten Kammer (23) hat, einer zweiten gasdichten Kammer (43), die einen Einlass (36) für das Hinzufügen von Gasen zu der zweiten gasdichten Kammer und einen Auslass (30) für das Entfernen von Gasen aus der zweiten gasdichten Kammer hat, wobei die zweite gasdichte Kammer (43) Mittel (33) für das mechanische Demontieren der Batterie oder Zelle (18) umfasst, wobei die erste gasdichte Kammer (23) eine gasdichte Tür (20) zur Aufnahme der Objekte aufweist, wobei die zweite gasdichte Kammer (43) eine gasdichte Tür (38) zum Entfernen der demontierten Batterie oder Zelle (18) aufweist, und wobei die erste gasdichte Kammer (23) und die zweite gasdichte Kammer (43) durch eine gasdichte Tür (21) zum Austausch der zu demontierenden Batterie oder Zelle (18) verbunden sind, wobei die Einlässe (24, 36) Kohlenstoffdioxid-Einlässe (24, 36) sind, und wobei die erste gasdichte Kammer (23) und die zweite gasdichte Kammer (43) und die Auslässe (30) zur Bereitstellung einer Kohlenstoffdioxid-Atmosphäre in den Kammern angeordnet sind, wobei die Mittel für das mechanische Demontieren Mittel (33) für das Ausführen eines mechanischen Verformungsprozesses (5) sind, **dadurch gekennzeichnet, dass** die Mittel (33) für das Ausführen des mechanischen Verformungsprozesses (5) bei ihrer Anwendung eine unvorhersehbare Mischung von Substanzen ergeben, wobei Kathodenmaterial der Batterie oder Zelle (18) und die Alkalimetall enthaltenden Substanzen durchgerieben und aneinander gerieben werden zur Reaktion der Alkalimetall enthaltenden Substanzen mit der Kohlenstoffdioxid-Atmosphäre während des mechanischen Verformungsprozesses (5) unter Ausbildung einer passiven Oberflächenschicht auf den Substanzen.

16. Anordnung nach Anspruch 15, wobei die Ein- und Auslässe (24, 36, 30) der gasdichten Kammern (23, 43) für das Hinzufügen von wenigstens einer weiteren gasförmigen Substanz zusätzlich zu der Kohlenstoffdioxid-Atmosphäre ausgebildet sind.

17. Anordnung nach einem der Ansprüche 15 oder 16, die für das Auffrischen der Atmosphäre während des Demontierens der Batterien oder Zellen (18) ausgebildet ist.

18. Anordnung nach einem der Ansprüche 15, 16 oder 17, wobei das Demontieren einen Schritt aus einer Gruppe aufweist, die Schreddern, Schneiden, Pressen, Verformen, Trennen, Brechen oder eine mechanische Verformungstechnik zum Bereitstellen von Restabfall umfasst.

19. Anordnung nach einem der Ansprüche 15-18, die zusätzlich zu den gasdichten Kammern (23, 43) einen Reaktorraum (39) zum Sammeln und Waschen der bearbeiteten Objekte mit einer angesäuerten, wässrigen Flüssigkeit umfasst, wobei der Reaktor (39) mit der gasdichten Tür (38) zum Entfernen der bearbeiteten Objekte aus der zweiten gasdichten Kammer (43) verbunden ist.

20. Anordnung nach einem der Ansprüche 15-19, die Mittel umfasst, die zur weiteren Verarbeitung der bearbeiteten Objekte vorgesehen sind, wobei die Mittel zur weiteren Verarbeitung dazu vorgesehen sind, wenigstens einen Schritt aus einer Gruppe auszuführen, die Pyrolyse, Sieben, Rotieren, Größenklassifizieren und jede andere Sortierungstechnik umfasst.

21. Anordnung nach einem der Ansprüche 15-20, die ferner Lagermittel aufweist, die zum Lagern der Batterien oder Zellen (18) unter der Kohlenstoffdioxid-Atmosphäre vor dem Demontieren vorgesehen sind.

## Revendications

1. Procédé (1) de démantèlement d'une batterie ou d'une cellule (18) comprenant des substances contenant un métal alcalin, ledit procédé comprenant la soumission de ladite batterie ou cellule (18) à un procédé de déformation mécanique (5) en présence d'une atmosphère protectrice (4), ladite atmosphère protectrice (4) étant une atmosphère de dioxyde de carbone, **caractérisé en ce que** ledit procédé de déformation mécanique (5), dans lequel un matériau de cathode de ladite batterie ou cellule et lesdites substances contenant un métal alcalin s'entremêlent et se frottent les uns sur les autres de manière intense, donne un mélange imprévisible de substances et dans lequel, lors dudit procédé de déformation mécanique (5), lesdites substances contenant un métal alcalin réagissent avec ladite atmosphère de dioxyde de carbone pour former une couche superficielle passive sur lesdites substances.

2. Procédé selon la revendication 1, dans lequel ladite atmosphère protectrice (4) est gazeuse.

3. Procédé selon l'une quelconque des revendications précédentes, dans lequel, en plus dudit dioxyde de carbone, ladite atmosphère protectrice (4) comprend au moins une substance gazeuse supplémentaire telle que, mais sans s'y limiter, un gaz inerte, de l'air humide, de l'azote et du monoxyde de carbone.

4. Procédé selon la revendication 3, dans lequel ladite au moins une substance gazeuse est ajoutée à ladite atmosphère protectrice (4) lors dudit démantèlement desdits objets.

5. Procédé selon l'une quelconque des revendications précédentes, dans lequel ladite atmosphère protectrice (4) est régénérée lors dudit démantèlement desdits objets.

6. Procédé selon l'une quelconque des revendications précédentes, dans lequel avant ledit démantèlement, ledit procédé comprend en outre une étape de stockage desdites batteries ou cellules (18) sous ladite atmosphère protectrice (4) au moyen d'un moyen de stockage.

7. Procédé selon l'une quelconque des revendications précédentes, comprenant en outre une étape de transport desdites batteries ou cellules (18) dans un moyen de stockage sous ladite atmosphère protectrice.

8. Procédé selon l'une quelconque des revendications précédentes, dans lequel ledit démantèlement comprend au moins une technique de déchiquetage, de découpe, de pressurisation, de déformation, de séparation, de cassure ou de déformation mécanique pour produire des déchets résiduels.

9. Procédé selon l'une quelconque des revendications précédentes, dans lequel après ledit démantèlement desdites cellules ou batteries (18), les déchets résiduels desdites cellules ou batteries (18) sont neutralisés.

10. Procédé selon la revendication 9, dans lequel ladite neutralisation desdits déchets est réalisée par l'ajout d'air humidifié à ladite atmosphère protectrice.

11. Procédé selon la revendication 9 ou 10, dans lequel après ladite neutralisation desdits déchets desdites cellules ou batteries (18), lesdits déchets sont lavés ou soumis à une lixiviation.

12. Procédé selon la revendication 11, dans lequel ledit lavage est réalisé avec un liquide aqueux acidifié.

13. Procédé selon la revendication 11 ou 12, dans lequel les produits résiduels dudit lavage ou de ladite lixiviation, tels qu'un liquide résiduel de lixiviation ou de lavage, sont traités afin de recycler les substances chimiques de valeur présentes dans ledit résidu.

14. Procédé selon l'une quelconque des revendications précédentes, comprenant une étape de traitement supplémentaire desdits déchets par au moins une technique choisie dans le groupe comprenant la pyrolyse, le tamisage, le tonnelage, le classement granulométrie et n'importe quelle autre technique de tri.

15. Système de démantèlement (46) de batterie ou de cellule permettant de démanteler une batterie ou une cellule (18) comprenant des substances contenant un métal alcalin, comprenant une première chambre étanche au gaz (23) dotée d'un orifice d'entrée (24) servant à introduire des gaz dans ladite première chambre étanche au gaz (23) et d'un orifice de sortie (30) servant à retirer les gaz contenus dans ladite première chambre étanche au gaz (23), une seconde chambre étanche au gaz (43) dotée d'un orifice d'entrée (36) servant à introduire des gaz dans ladite seconde chambre étanche au gaz et d'un orifice de sortie (30) servant à retirer les gaz contenus dans ladite seconde chambre étanche au gaz, ladite seconde chambre étanche au gaz (43) comprenant des moyens (33) permettant de démanteler mécaniquement ladite batterie ou cellule (18), ladite première chambre étanche au gaz (23) possédant une porte étanche au gaz (20) pour recevoir lesdits objets, ladite seconde chambre étanche au gaz (43) possédant une porte étanche au gaz (38) pour retirer ladite batterie ou cellule (18) démantelée, et ladite première chambre étanche au gaz (23) et ladite seconde chambre étanche au gaz (43) sont raccordées par porte étanche au gaz (21) pour échanger ladite batterie ou cellule (18) à démanteler, lesdits orifices d'entrée (24, 36) étant des orifices d'entrée de dioxyde de carbone (24, 36) et ladite première et ladite seconde chambre étanche au gaz (23, 43) et lesdits orifices de sortie (30) étant conçus pour fournir une atmosphère de dioxyde de carbone dans lesdites chambres, lesdits moyen de démantèlement mécanique étant des moyens (33) permettant de mettre en ouvre un procédé de déformation mécanique (5), **caractérisé en ce que** lesdits moyens (33) permettant de mettre en ouvre ledit procédé de déformation mécanique (5), lors d'une utilisation dans laquelle un matériau de cathode de ladite batterie ou cellule (18) et lesdites substances contenant un métal alcalin s'entremêlent et se frottent les uns sur les autres, donnent un mélange imprévisible de substances, for faire réagir lesdites substances contenant un métal alcalin avec ladite atmosphère de dioxyde de carbone lors dudit procédé de déformation mécanique (5) pour former une couche superficielle passive sur lesdites substances.

16. Système selon la revendication 15, dans lequel lesdits orifices d'entrée et de sortie (24, 36, 30) desdites chambres étanches au gaz (23, 43) sont conçus pour introduire au moins une substance gazeuse supplémentaire en plus de ladite atmosphère de dioxyde de carbone.

17. Système selon la revendication 15 ou 16, conçu pour régénérer ladite atmosphère lors dudit démantèlement desdites batteries ou cellules (18).

18. Système selon l'une quelconque des revendications 15, 16 ou 17, dans lequel ledit démantèlement comprend l'une quelconque des techniques choisies dans le groupe comprenant le déchiquetage, le découpage, la pressurisation, la déformation, la séparation, la cassure ou une technique de déformation mécanique pour produire des déchets résiduels.

19. Système selon l'une quelconque des revendications 15 à 18, comprenant, en plus desdites chambres étanches au gaz (23, 43), une salle de réacteur (39) servant à collecter et à laver lesdits objets traités avec un liquide aqueux acidifié, ledit réacteur (39) étant raccordé à ladite porte étanche au gaz (38) pour retirer lesdits objets traités contenus dans ladite seconde chambre étanche au gaz (43).

20. Système selon l'une quelconque des revendications 15 à 19, comprenant des moyens conçus pour traiter davantage lesdits objets traités, les moyens permettant d'effectuer un traitement supplémentaire étant conçus pour mettre en oeuvre au moins une technique choisie dans le groupe comprenant la pyrolyse, le tamisage, le tonnelage, le classement granulométrique et n'importe quelle autre technique de tri.

21. Système selon l'une quelconque des revendications 15 à 20, comprenant en outre un moyen de stockage conçu pour stocker lesdites batteries ou cellules (18) sous ladite atmosphère de dioxyde de carbone, avant ledit démantèlement.
